# EUROPEAN PATENT SPECIFICATION

(11) **EP 4 184 018 B1**
(45) Date of publication and mention of the grant of the patent: **09.12.2026**
(21) Application number: 22208784.3
(22) Date of filing: 22.11.2022
(51) Int. Cl.: E04D 1/30, E04D 1/34, F16B 2/12, F16B 5/06, F16B 21/09, F24S 25/61, F24S 25/00, F24S 25/60, F24S 25/613, F24S 25/65, H01Q 1/12

(54) **A ROOF ATTACHMENT CONSOLE**
DACHBEFESTIGUNGSKONSOLE
CONSOLE DE FIXATION DE TOIT

(30) Priority: 22.11.2021 EP 21209602
(43) Date of publication of application: 24.05.2023
(73) Proprietor: Mats Lundqvist AB, 56162 Tenhult (SE)
(72) Inventor: Lundqvist, Mats, 56162 TENHULT (SE)
(74) Representative: AWA Sweden AB

(56) References cited:
- DE-A1- 102007 043 293
- GB-A- 2 472 073
- GB-A- 2 487 568
- US-B1- 10 277 162
- US-B1- 8 839 575

## Description

### Field of invention

The present invention relates to a roof attachment console, and especially a roof attachment console for receiving a mounting rail configured for e.g. solar panel installations.

### Technical Background

With an increased use of solar panels, due to sustainability and economic reasons, there is an increased need for stable solutions of mounting solar panels onto roofs. Moreover, other devices which are to be mounted on roofs, such as lightning rods and antennas need stable mounting arrangements. The stability of such solutions is a challenge, in particular on roof tiles, where the panels are not fixed by any other means than the weight of overlapping portions of adjacent panels. Today solar panels are often mounted using brackets attached to the roof below roof tiles and extending out between roof tiles, which provides a great risk of damage to the existing roof tiles, and thereby a risk of leakage and damage to the roof. Other existing solutions involve mounting onto conventional tile panels, but which may comprise complicated attachment configurations for the solar panel, making the procedure of mounting a solar panel or other equipment onto the roof difficult and risky. Moreover, there are solutions in which the roof waterproofing needs to be punctured, entailing higher risk for leakage. Furthermore, roofs are exposed to local weather conditions such as rain and wind which may bring small tree branches and leaves to the roof, resulting in a load on the construction and decreased friction between adjacent panels and linked objects used to mount devices on the roof. The mounting of solar panels may also be a demanding work possibly associated with a risk of working at high elevation at present weather conditions. An example of an attachment console for a pipe is shown in GB 2472073 A. Another example of a roof attachment console intended to be mounted onto a roof and configured to replace a regular roof tile allowing the fixing of a mounting rail is shown in GB 2487568 A.

There is therefore a need of a safer, more efficient and stable solution for the arrangement of how the solar panels and other equipment are mounted and maintained onto roofs.

### Summary of invention

It is an object of the invention to provide a roof attachment console which enhances the safety and convenience of the mounting of solar panels and other devices, such as antennas or lightning rods, onto a roof and further to provide a stable arrangement.

The invention is defined by the appended independent claim 1, with embodiments being set forth in the appended dependent claims, in the following description and in the drawings.

According to one aspect of the invention there is provided a roof attachment console intended to be mounted onto a roof, allowing a mounting rail to be attached onto said attachment console. The attachment console comprises a bottom plate intended to be mounted onto a roof, a rail receiving plate, configured to receive a mounting rail, said rail receiving plate having a track and being attached to the bottom plate and a fixation member configured to, at a first end of the fixation member, engage with said track, and at a second end of the fixation member be attached to the rail receiving plate to fix a mounting rail to the rail receiving plate.

The apparatus of the innovation may provide a safer and more stable solution than existing products. The mounting rail may be used for attaching a solar cell, a safety arrangement, a snow breed protection or another roof mounted arrangement. The fixation member may allow the mounting rail to be fixed to the rail receiving plate without being significantly moved by forces it may be exposed to, such as from the installer of the solar panels or other maintenance taking place on the roof. By having a track on the rail receiving plate, with which the fixation member is configured to engage, a fast and easy fixation of the mounting rail to the rail receiving plate may be provided. The first end of the fixation member may be formed in shape and size to engage with the track such that the fixation member may be attached to the rail receiving plate without further tools or fastening means being needed at the first end of the fixation member. Compared to a conventional screw based attachment of a mounting rail to a roof bracket, a user may need less effort in fixing the mounting rail to the rail receiving plate. The mounting rail may be arranged to rest on the rail receiving plate, and the fixation member may engage with the track to be fastened to the rail receiving plate and thereby fixing the mounting rail to the rail receiving plate.

The roof attachment console is configured to be arranged in combination with adjacent roof tiles or roof panels of the roof. The bottom plate may have a shape and size adapted to engage with adjacent roof tiles or roof panels of a particular roof. The roof tiles or roof panels may preferably be made of tile/brick, concrete, metal, ceramics or the like. The bottom plate of the roof attachment console may be made of metal, preferably steel, or other material, such as wood, concrete or plastics. The same material selection may be made for other components of the roof attachment console.

In a not claimed embodiment, the roof attachment console may further comprise a support member arranged on the bottom plate and configured to support the rail receiving plate. The support member may be adapted in shape and size to the shape and size of the rail receiving plate. In a not claimed embodiment, the rail receiving plate may be integrally formed with a support member, providing the rail receiving plate comprising a support portion providing support on the bottom plate.

In one embodiment, the fixation member may be configured to, at the second end of the fixation member, be attached to the rail receiving plate by at least one fastening means. Preferably, the at least one fastening means may be a screw, a bolt or a snapping means, which may entail a stable attachment of the fixation member to the rail receiving plate at. According to the invention, the fixation member is beconfigured to engage with the rail receiving plate, optionally by means of a fastening means, at a location different from the engagement with the track of the rail receiving plate.

Such location is the second end of the fixation member, which may be an opposite end to the first end of the fixation member. The rail receiving plate and the fixation member may both be formed to enable attachment to each other by said fastening means.

In one embodiment, the fastening means may be a snapping means, and the rail receiving plate may comprise a first snap member and the fixation member may comprise a second snap member. The two snap members may be configured to engage with each other in a snap fastening. One or both of the snap members may be hook shaped, the two hook shapes being configured to engage with each other. One of the snap members may be hook shaped and the other snap member may be formed as an opening configured to engage with the hook shaped member. With a snap fastening means, the fixation member may be fixed to the rail receiving plate, thereby fixing a mounting rail to the rail receiving plate, in a quick and easy manner, without the need of further tools or fastening means, such as screws.

In a further embodiment, the fixation member may be configured for different engagement with the at least one track of the rail receiving plate depending on the size of the mounting rail. Different engagement may be fixation at different points along the track or along the fixation member. Mounting rails of different sizes may thereby be attached to the rail receiving plate.

In one embodiment, the fixation member may comprise at least one pair of recesses configured to engage with the at least one track of the rail receiving plate. The pair of recesses may be oriented in such way that the fixation member is allowed to move along the track but not detach from the track when the recesses are in engagement with the track. The at least one pair of recesses may be configured such that the fixation member, in a first orientation, may be moved into or out of the track, and upon rotation of the fixation member when moved into the track the at least one pair of recesses may come into engagement with the track. Said rotation may be around a longitudinal axis of the fixation member. A similar rotation may be made in order to change the engagement of the fixation member with the track from a first pair of recesses to a second pair of recesses. Alternatively, the track may be formed in a way such that rotation of the fixation member may not be necessary. For instance, an end portion of the track may have width enabling the fixation member to be inserted, and then moved into a part of the track with the at least one pair of recesses comes into engagement with the track.

The attachment console may further be configured to fix the mounting rail to the rail receiving plate through force resulting from the fixation member being attached to the rail receiving plate. The mounting rail may be clamped between the fixing member and the rail receiving plate. This arrangement may provide a stable attachment of the mounting rail onto the rail receiving plate.

The fixation member may in one embodiment comprise at least two pair of recesses, wherein which pair of recesses to engage with the at least one track of the rail receiving plate may depend on the size of the mounting rail to be fixed to the rail receiving plate. When mounting the mounting rail, outer pairs of recesses are led through the track opening, by orienting them in required manner until the pair of recesses which are to engage with the rail receiving plate are through. Followingly, the pair of recesses which are to engage with the rail receiving plate are oriented to not detach from the track. This arrangement may especially enhance the possibility to attach mounting rails of different heights and/or widths to the rail receiving plate. The pairs of recesses may be located sequentially along the longitudinal extension of the fixation member. Each of the recess of a pair of recesses may extend in a direction transverse to the longitudinal extension of the fixation member.

In one embodiment, the rail receiving plate may have a first portion extending in a first plane, a second portion extending in a second plane in parallel with and offset said first plane, and the first and second portions may be connected via a third portion. In one embodiment the third portion may extend in a third plane substantially perpendicular to said first and second planes. The geometry of the three portions may enable the mounting rail to rest against two surfaces of the rail receiving plate, enhancing the stability of the arrangement, and enabling fixation of the mounting rail using the fixation member. The at least one track may be arranged on the first portion and/or the second portion. The third portion may be adapted in shape and size to the mounting rail intended to be received. For a mounting rail with a rectangular cross-section, the third portion may extend substantially perpendicular to the first and second planes. For a mounting rail with a circular or elliptical cross-section, the third portion may have a rounded, curved or bent form connecting the first and second portions. Similarly, the fixation member may have a shape adapted to the shape of the mounting rail intended to receive, such as rectangular shaped or circular/elliptical.

In one embodiment, the at least one track may comprise a first track arranged on said first portion and a second track on said second portion. The fixation member may be fixed at points on the first or second portion of the rail receiving plate, which may be possible even if the third portion lacks a track. The third portion may also comprise a track. In one embodiment, the tracks on the first and second portions may be portions of the same track extending across the first, second and third portions of the rail receiving plate.

In one embodiment, the fixation member may engage with the first track on the first portion by a fastening means and one of the at least one pair of recesses engages with the second track on the second portion. By letting at least one pair of recesses engage with the second track there may not be a need for screws or bolts at two points of the rail receiving plate, enhancing the convenience of mounting of the mounting rail. Further, the number of components of the arrangement may be reduced. The fastening means may be a screw, a bolt, a snap fastening or the like. Thereby the risk of losing e.g. a screw or o bolt may be reduced and the amount of material needed is decreased.

In one embodiment, the second track on the second portion may have an end portion being wider than the rest of the track. Such wider end portion may be configured to be at least as wide as protrusions of the fixation member forming the at least one pair of recesses. The fixation member may thereby be moved into the end portion without the at least one pair of recesses engaging with the second track, and then moved into the second track such that the at least one pair of recesses engages with the second track.

In one embodiment, the rail receiving plate may comprise a first portion extending in a first plane, and a third portion extending perpendicular to said first plane. The at least one track may comprise a third track on said third portion, wherein the first end of the fixation member is configured to engage with said third track. The first end of the fixation member may be configured in shape and size to engage with the track on the third portion. The mounting rail may be received on the first and third portions of the rail receiving plate. The fixation member may extend from the track on the third portion to the first portion at which it may be engaged with the rail receiving plate, e.g. by means of fastening means, such as screw, bolt or snapping means. The mounting rail may thereby be received between the rail receiving plate and the fixation member. The third track may extend in a direction substantially perpendicular to a longitudinal extension direction of the fixation member. The longitudinal extension direction of the fixation member may be a direction extending from the first end to the second end of the fixation member.

In one embodiment, the first end of the fixation member may comprise a hook shape configured to engage with the third track. The hook shaped first end of the fixation member may be inserted into the track on the third portion in order to engage to two parts to each other. When arranged thereto and extending with the second end to the first portion of the rail receiving plate, the fixation member may be securely arranged to the rail receiving plate. A hook engagement with the track on the third portion of the rail receiving plate may provide a fast and easy assembly of the fixation member to fix a mounting rail to the roof attachment console.

In one embodiment, the roof attachment console may be configured to fix the mounting rail to the rail receiving plate through a force resulting from the fixation member engaging with the first portion by fastening means and first end of the fixation member, e.g. by means of one of the at least one pair of recesses or the hook shape, engaging with the second or third track. One of the pair of recesses may be oriented to engage with the second track and thereafter tension is applied by pulling the second end of the fixation member which is to engage with the first portion. When appropriate tension is applied to fix the mounting rail to the rail receiving plate in a stable manner the fixation member may engage with the first portion by said fastening means, which may be screwing or bolting or snapping or the like. The tension may thereby be retained, resulting in the force which fixes the mounting rail onto the rail receiving plate. At the first portion, there may be provided a hole, a track or a shape configured to receive the appropriate fastening means.

According to the invention, the roof attachment console is configured to replace a regular roof tile or roof panel of a roof. This may entail the attachment console to be attached to the roof truss and there may be no need for involvement of other roof tiles than the one the attachment console is to replace and adjacent ones.

In one embodiment, the roof attachment console may comprise an adjustable upper portion configured in shape and size to fit together with an adjacent upper roof tile or roof panel of the roof, and/or an adjustable lower portion configured to fit together with an adjacent lower roof tile or roof panel of the roof. This may enhance the possibility for the attachment console to fit into a pattern of conventional tiles or panels of the roof. Said adjacent roof panel may in one embodiment be formed of sheet metal roof panels. The bottom plate may comprise, for the adjustable upper portion an upper flange comprising at least one or at least two elongated openings for enabling vertical adjustment of the adjustable upper portion. Similarly, the bottom plate may comprise a lower flange comprising at least one or at least two elongated openings for enabling vertical adjustment of the adjustable lower portion. The flanges may extend substantially perpendicular to the bottom plate.

The bottom plate may have rabbets along its elongation configured to fit together with horizontally adjacent roof tiles or roof panels. This may further enhance the possibility for the attachment console to fit into a pattern of conventual tile panels.

In one embodiment, the attachment console may have at least one support for a lath at a bottom side of the bottom plate. Said support may be configured to be attached to the roof above the roof waterproofing by at least one fastening means. The support may further be fixed to the roof truss, thereby fixing the roof attachment console directly to the roof truss. This may enable the attachment console to attach to the roof in a stable manner. The attachment to the roof truss may be made by screws extending through the bottom plate, and optionally through the support, into the lath and further into the roof truss.

In one embodiment, the attachment console may comprise a connection means for a lifeline. This may enhance the safety of maintenance on the roof, and of the attachment console as long as the bottom plate is safely attached to the roof. The connection means may be especially useful in the common case of the roof lacking other connection means for a lifeline. The connection means for a lifeline may be a connection opening that may be arranged on the rail receiving plate or another part arranged to the bottom plate. In one embodiment such connection opening may be arranged in combination with the at least one track on the rail receiving plate. The connection opening may be formed as an end portion of said track, which end portion may be wider than the rest of the track.

In one embodiment, the rail receiving plate may be provided with an additional fastening element for attachment of additional equipment related to the roof related devices. Such fastening element may be a threaded hole.

According to the invention, the roof attachment console further comprises an adjustment member arranged between the bottom plate and the rail receiving plate. The adjustment member comprises a threaded rod and a threaded opening configured for threaded engagement with said rod. The rod is attached to the rail receiving plate, and the adjustment member is configured to enable an adjustment of a distance between the rail receiving plate and the bottom plate by adjusting the threaded engagement between the rod and the threaded opening. By screwing the rod and the rail receiving plate, the height position of the rail receiving plate relative to the bottom plate may thereby be adjusted. This may further facilitate the mounting of a mounting rail to a roof. The distance between a mounting rail arranged to the rail receiving plate and the bottom plate and/or the roof may thereby be adjusted in a desired way. A roof may not always be completely plane, but at different locations on a roof there may be irregularities, requiring the position in height of the rail receiving plate to be different for different roof attachment consoles in order to arrange the mounting rail correctly. In order to further facilitate the work for a user mounting the mounting rail, the adjustment member according to this embodiment may provide an easy height adjustability of the rail receiving plate.

According to the invention, the roof attachment console further comprises an adjustment plate arranged between the bottom plate and the rail receiving plate. The adjustment plate is configured to be attached to the bottom plate by means of fastening means in an adjustable position along a longitudinal extension of the bottom plate. The adjustment plate comprises at least two elongated openings through which fastening means are configured to extend to engage with the bottom plate. Different positions of the fastening means in the elongated openings provide different positions of the adjustment plate relative to the bottom plate. The roof attachment console may be placed on a predetermined position on a roof, which position may be decided by e.g. placement of other roof tiles or other parts of the roof fixture. The desired location of the rail receiving plate in relation to other rail receiving plates of other roof attachment consoles on the roof may require an adjustment of the position of the rail receiving plate along a direction of the longitudinal extension of the bottom plate. Such direction may further be along the inclination of the roof, and substantially perpendicular to the extension of the mounting rail. By having elongated openings, enabling fastening means used to fasten the adjustment plate to the bottom plate to fix the adjustment plate in different positions relative to the bottom plate, a further adjustability of the roof attachment console may be provided, that may further facilitate the mounting of a mounting rail to the roof.

According to the invention, the adjustment plate is further combined with the adjustment member. The adjustment member may be part of the adjustment plate, thereby receiving the threaded rod in the threaded opening. When the adjustment plate is adjusted in its position relative to the bottom plate, the rail receiving plate being arranged to the adjustment plate may further be adjusted in height relative to its surroundings, such as other rail receiving plates of other roof attachment consoles on the roof. By also being possible to adjust the rail receiving plate's height relative to the bottom plate by means of the threaded rod and threaded opening, an adjustability is provided to further facilitates for a user to mount the mounting rail to the roof.

In one embodiment, the bottom plate may comprise a cable hose connection opening extending through the bottom plate and configured to receive cable hose connection terminals on the respective top and bottom sides of the bottom plate. The cable hose connection terminals may be configured to be attached to each other through the cable hose connection opening to provide a secure and sealed cable entry through the bottom plate. A cable hose may then extend from a top side of the bottom plate, being the side at which the rail receiving plate is arranged, to a bottom side of the bottom plate, being the side facing the roof when in use. The cable hose may be used to guide cables used for equipment arranged to a mounting rail received by the rail receiving plate from said equipment to under the roof to its intended destination. A secure cable installation may thereby be provided that protects the cables. In one embodiment, the roof attachment console comprises such cable hose connection terminals and cable hose attached thereto.

By the elongation of the mounting rail it may be meant the direction, when the mounting rail is mounted, parallel to the purlins of the roof.

By height of the mounting rail it may be meant the height in a plane perpendicular to a plane through the roof surface.

By width it may be meant the extension perpendicular to the height and the elongation of the mounting rail.

### Brief description of the drawings

The inventive concept, non-limiting embodiments and further advantages are further described in more detail with reference to the drawings in which:
Fig. 1 shows a perspective view of a roof attachment console according to a not claimed embodiment where a bottom plate and a rail receiving plate are shown;
Fig. 2 shows a perspective view of a roof attachment console according to a not claimed embodiment;
Fig. 3 shows a perspective view of a roof attachment console according to a not claimed embodiment;
Fig. 4 shows a perspective view of a roof attachment console according to a not claimed embodiment;
Fig. 5 shows a side view of a roof attachment console according to a not claimed embodiment;
Fig. 6 shows a front view of a roof attachment console according to a not claimed embodiment;
Fig. 7 shows a perspective view of a roof attachment console according to an embodiment, according to the invention;
Fig. 8 shows a perspective view of a roof attachment console according to an embodiment, according to the invention;
Fig. 9 shows a perspective view of a roof attachment console according to an embodiment, according to the invention;
Fig. 10 shows a perspective view of a roof attachment console according to an embodiment, according to the invention;
Fig. 11 shows a perspective view of a roof attachment console according to an embodiment, according to the invention;
Fig. 12 shows a perspective view of a bottom plate according to an embodiment, according to the invention;
Fig. 13 shows a side view of a bottom plate according to an embodiment, according to the invention; and
Fig. 14 shows a perspective view of a roof attachment console according to an embodiment, according to the invention.

### Detailed description of preferred embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

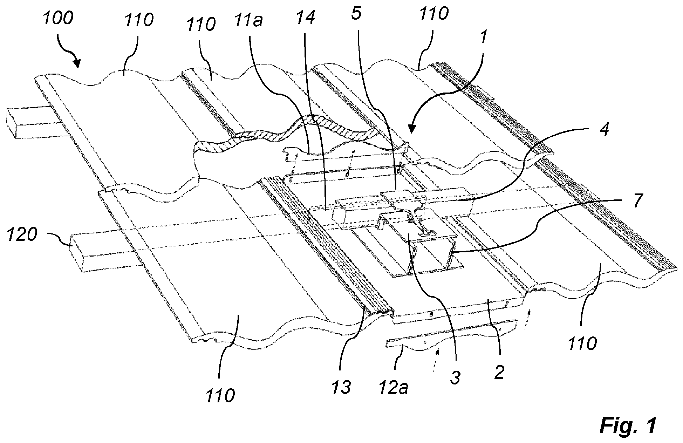

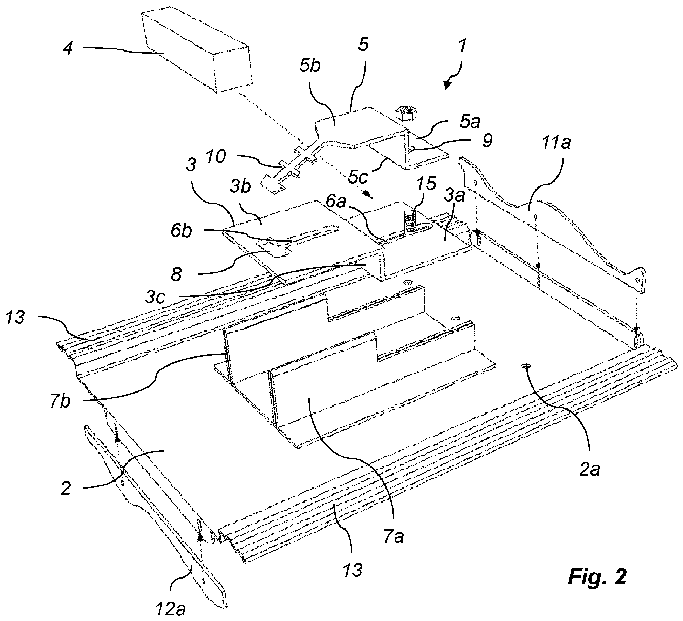

Fig 1. and Fig 2. illustrate a roof attachment console 1 according to one embodiment from two different perspectives. In Fig. 1, the roof attachment console 1 is shown arranged on a roof 100 with adjacent roof tiles 110. A mounting rail 4 is to be attached onto said attachment console 1. The roof attachment console 1 comprises a bottom plate 2 that is configured to replace a regular roof tile 110 or roof panel on the roof 100. The bottom plate 2 fit together with horizontally adjacent tiles by rabbets 13. A support 14 for a lath 120 on the lower side of the bottom plate 2 is seen transparently in Fig. 1 and directly in Fig. 2. The support 14 for the lath 120 may also be fastened onto a roof truss by fastening means such as screw or bolt through holes 2a in the bottom plate 2 (see fig. 2). An adjustable upper portion 11a and an adjustable lower portion 12a are used for the bottom plate 2 to fit together with adjacent upper and lower tiles 110, respectively.

The roof attachment console 1 further comprises a rail receiving plate 3. In the illustrated embodiment the rail receiving plate 3 is seen arranged onto two supports 7a and 7b, although other configurations of support are possible. The rail receiving plate 3 comprises a first portion 3a, a second portion 3b and a third portion 3c. The first and second portions 3a, 3b extend in respective first and second planes, which planes are in parallel. The two planes are offset each other. The first and second portions 3a, 3b are connected to each other via the third portion 3c extending in a plane substantially perpendicular to the first and second planes. The portions 3a, 3b, 3c of the rail receiving plate 3 is mounted onto the supports 7a, 7b. The two supports 7a, 7b may be integrally formed with the bottom plate 2, welded onto the bottom plate 2, or attached to the bottom plate 2 in another way.

This configuration as illustrated is preferred for the mounting rail 4 being elongated and having an essentially rectangular cross section. Other shapes of the rail receiving plate 3 may be possible or even required for the case of the mounting rail 4 having a different cross section. It is however preferable that the shape of the rail receiving plate 3 at least partly matches the shape of the mounting rail 4.

As seen in Fig. 2, the mutually essentially parallel portions 3a, 3b of the rail receiving plate 3 each comprises a track 6a, 6b. A configuration with only one track is also possible. For instance, only the second portion 3b may be provided with a track 6b, and the first portion 3a may be provided with at least one hole for receiving a fastening means 9. Alternatively, the rail receiving plate 3 may comprise a single track extending from the first portion, via the third portion, to the second portion, and the first and second portions may each be provided with a portion of the track. In the illustrated embodiment, each track 6a, 6b on the first and second portions 3a, 3b extend along a part of the extension of the respective portion 3a, 3b. The two tracks 6a, 6b extend along a common extension line.

As seen in Figs. 1 and 2, the roof attachment console 1 further comprises a fixation member 5. The fixation member 5 is configured to be attached to the rail receiving plate 3 to clamp the mounting rail 4 between the fixation member 5 and the rail receiving plate 3. The fixation member 5 comprises an opening 9 for receiving a fastening means 15 by means of which the fixation member 5 can be attached to the rail receiving plate 3. The fixation member 5 comprises a first portion 5a, a second portion 5b and a third portion 5c. The first and second portions 5a, 5b extend in respective planes being in parallel. The first and second portions 5a, 5b are connected via the third portion 5c extending in a plane substantially perpendicular to the planes of the first and second portions 5a, 5b. The hole 9 is arranged on the first portion 5a. The fastening means 15 is configured to extend through the hole 9 of the first portion 5a of the fixation member 5 and the track (or hole) 6a of the rail receiving plate 3. The first portion 5a of the fixation member 5 can thereby be fixed to the first portion 3a of the rail receiving plate 3.

The fixation member 5 further comprises an engagement member 10 comprising a plurality of pairs of recesses 10 configured to engage with the track 6b on the second portion 3b of the rail receiving plate 3. The engagement member 10 extends from the second portion 5b of the fixation member 5. The engagement member 10 extends inclined relative the extension plane of the second portion 5b of the fixation member 5. The engagement member 10 comprises a central elongated portion, with a plurality of transversely extending pairs of protrusions, thereby forming the pairs of recesses. The pairs of recesses are configured to engage with the track 6b on the second portion 3b of the rail receiving plate 3. When being arranged to the rail receiving plate 3, the fixation member 5 is rotated 90 degrees relative the position as illustrated, such that the engagement member 10 can enter the track 6b. The thickness of the engagement member 10 is less than the width of the track 6b. When the engagement member 10 extends into the track 6b, the fixation member 5 is rotated back 90 degrees such that a pair of recesses on the engagement member 10 engages with the second portion 3a of the rail receiving plate 3 through the track 6b. The plurality of pairs of recesses on the engagement member 10 enables different positions of the fixation member 5, suitable for different sizes of mounting rails 4 to be arranged on the roof attachment console 1.

The illustrated embodiment further comprises an optional feature of a wider end portion 8 of the track 6b on the second portion 3b of the rail receiving plate 3. The end portion 8 is wider than the rest of the track 6b. The end portion 8 thereby enables the engagement member 10 to be inserted into the track 6b without the need of rotation, and then moved to the other part of the track 6b such that a pair of recesses can engage with the track 6b.

The end portion 8 may additionally function as a connection means for a lifeline to be arranged to the roof attachment console for a user to use when working on the roof.

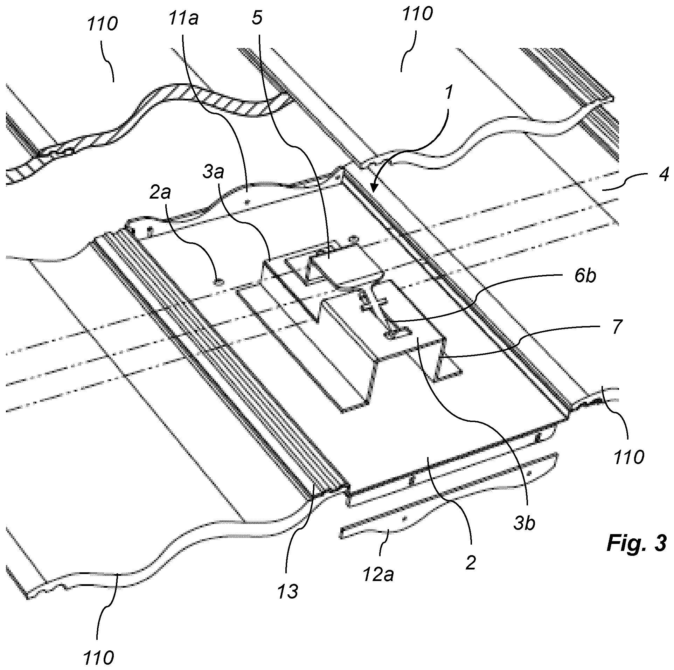

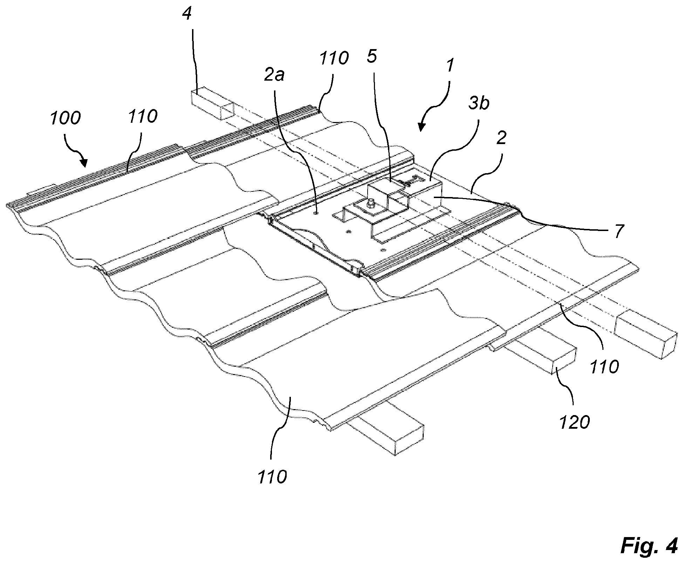

Figs. 3 and 4 illustrate an embodiment of the roof attachment console 1 wherein the rail receiving plate 3 is at least partly integrally formed with the support 7. The rail receiving plate 3 may be seen as one component with the support 7 providing the arrangement to the bottom plate 2. In one embodiment, the second portion 3b of the rail receiving plate 3 is formed as an integral part of the support 7, formed from e.g. a bent sheet. The first portion 3a of the rail receiving plate 3 may instead be attached to the support 7 by e.g. welding. A facilitated manufacturing of the rail receiving plate 3 may thereby be achieved, with further improved strength in the construction. The first and second portions 3a, 3b thereby is formed to extend in offset and parallel planes. Other components of the roof attachment console 1 may be similar as the other illustrated embodiments.

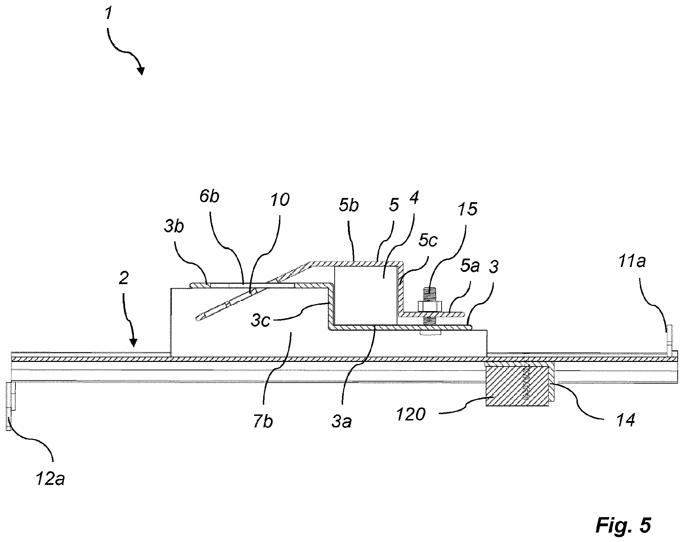

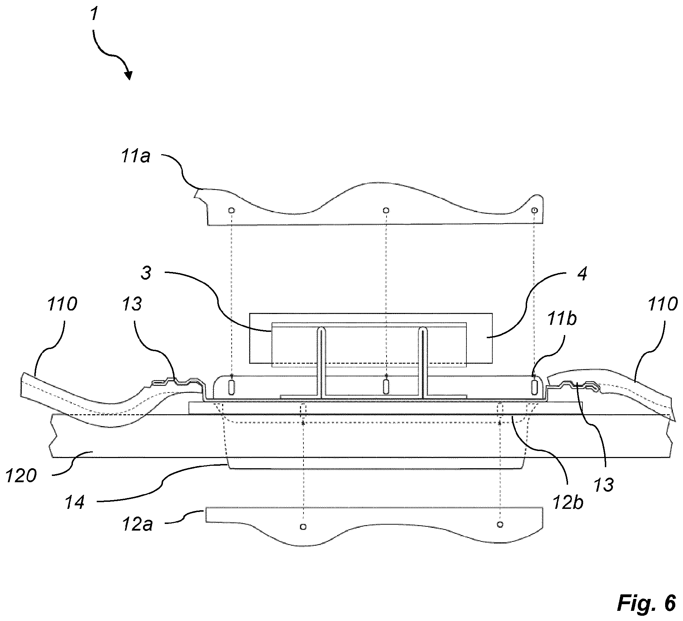

In Figs. 5 and 6 it is further illustrated that the mounting rail 4 is fixed to the rail receiving plate 3 by the fixation member 5 being fixed to the rail receiving plate 3 and how the roof attachment console 1 is arranged to roof tiles 110, according to one embodiment. Here the fixation member 5 is fastened to one track 6a of the rail receiving plate 3 by fastening means 15. When mounting the mounting rail 4, the mounting rail 4 is preferably first placed on the rail receiving plate 3. For the case of the mounting rail 4 having an essentially rectangular cross section, the rail receiving plate 3 having parallel upper and lower surfaces 3a and 3b and one surface 3c essentially perpendicular to the upper and the lower surface, the mounting rail 4 is preferably placed in contact with two of the surfaces of the rail receiving plate 3, such as the first surface 3a and the third surface 3c. Thereafter, the engagement member 10 with the pairs of recesses is inserted into the track 6b. At least one pair of recesses is directed through the track 6b such that the pair of recesses which is to engage with the track 6b extends through the track 6b. The pairs of recesses engages with the track 6b such that the engagement member 10 cannot be removed from the track 6b by only pulling it away from the rail receiving plate 3. The protrusions of the engagement member 10, formed by the at least one pair of recesses, thereby engages with the track 6b and the second portion 3b of the rail receiving plate 3.

At the other end of the fixation member 5, at the first portion 5a of the fixation member 5, the fastening means 15, in the illustrated embodiment a bolt with nut, is used to attach the first portion 5a of the fixation member 5 to the first portion 3a of the rail receiving plate 3.

In the illustrated embodiment, the engagement member 10 comprises three pairs of recesses. Depending on the size and/or shape of the mounting rail 4, a pair of recesses on the engagement member 10 may be selected to enable the fixation member 5 to reach above the mounting rail 4 to enable the first portion 5a to be attached to the first portion 3a of the rail receiving plate 3.

If the fixation member 5 does not reach over the mounting rail 4, another pair of recesses may be selected to engage with the track 6. The size of the mounting rail 4 may further affect at which point along the track 6a the fastening means 15 is located when extending through the first portion 3a of the rail receiving plate and the opening 9 on the first portion 5a of the fixation member 5. The different sizes of the mounting rail 4 can be different width and/or height of the mounting rail 4. Adjustments regarding which pair of recesses to engage with the track 6b is mainly to adjust for different heights of the mounting rail 4. In the illustrated embodiment the engagement member 10 is arranged to the second track 6b and the fastening means 15 is used to attach the fixation member 5 at the first portion 3a through the first track 6a. In another embodiment, the engagement member 10 be arranged at the first track 6a and the fastening means 15 may be arranged at the second track 6b.

As seen in fig. 5, the support 14 for the lath 120 is L-shaped, being in contact with two sides of the lath 120. The bottom plate 2 is provided with a plurality of holes 2a (seen in figs. 2-4), enabling fastening means, such as screws, to be inserted through the bottom plate 2, the support 14 and into the lath 120. It may be further beneficial to use longer screws such that the screw extends through the lath 120 and further into a truss of the building the roof is arranged on.

The adjustable upper portion 11a is connected to an upper flange 11b arranged on the bottom plate 2. The upper flange 11b has elongated openings such that the adjustable upper portion 11a can be fastened thereto by fastening means in a vertically adjustable manner. Similarly, adjustable lower portion 12a is connected to a lower flange 12b arranged on the bottom plate 2. The lower flange 12b has elongated openings such that the adjustable lower portion 12a can be fastened thereto by fastening means in a vertically adjustable manner.

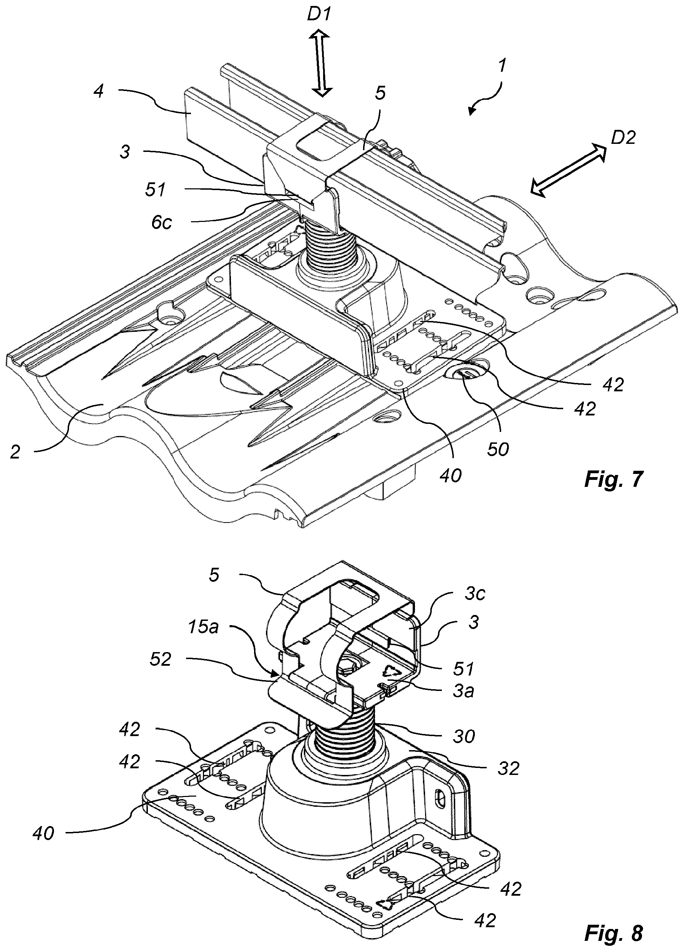

Figs. 7-14 illustrate embodiments of the invention wherein the fixation member 5 and the rail receiving plate 3 are configured to fix a mounting rail 4 to the roof attachment console 1. A first end 51 of the fixation member is configured to engage with a track 6c on the rail receiving plate 3. The rail receiving plate 3 in this embodiment comprises a firs portion 3a and a third portion 3c. The first and third portion 3a, 3c are arranged perpendicular to each other, and are configured to receive the mounting rail 4. The track 6c is arranged on the third portion 3c of the rail receiving plate 3. At the first end 51, the fixation member 5 has a bent shape or a hook shape in order to engage with the track 6c. The first end 51 of the fixation member 5 may easily be engaged with the track 6c by inserting it into the track 6c and pulling the fixation member 5 such that the first end 51 engages with the track 6c.

The fixation member 5 has a second end 52, opposite said first end 51, configured for a snap fastening to the rail receiving plate 3. At an end section of the first portion 3a, the rail receiving plate 3 is configured for snap fastening with the second end 52 of the fixation member 5. The first portion 3a of the rail receiving plate 3 may have a shape that is adapted to releasably engage with the second end 52 of the fixation member 5 in a snap fastening. The fixation member 5 and/or the first portion 3a of the rail receiving plate 3 may be configured to have resilient properties to enable a snap fastening between the two components. Preferably, the fixation member 5 may be configured in form and shape to provide resilient properties such that the second end 52 can be forced into snap engagement with the first portion 3a.

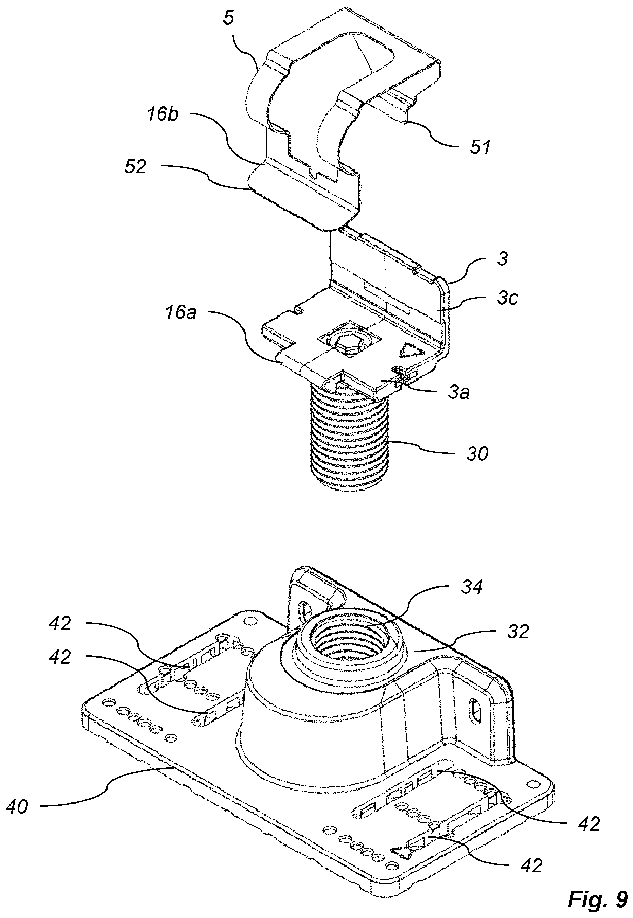

In fig. 9 the fixation member 5 and the rail receiving plate 3 are illustrated in a separated configuration. The first portion 3a of the rail receiving plate 3 comprises a first snap member 16a, and the fixation member 5 comprises at the second end 52 a second snap member 16b. The two snap members 16a, 16b are configured for snap engagement with each other. The first snap member 16a may be a hook shaped edge. The second snap member 16b comprises an opening through which the first snap member 16a may extend when in snap engagement.

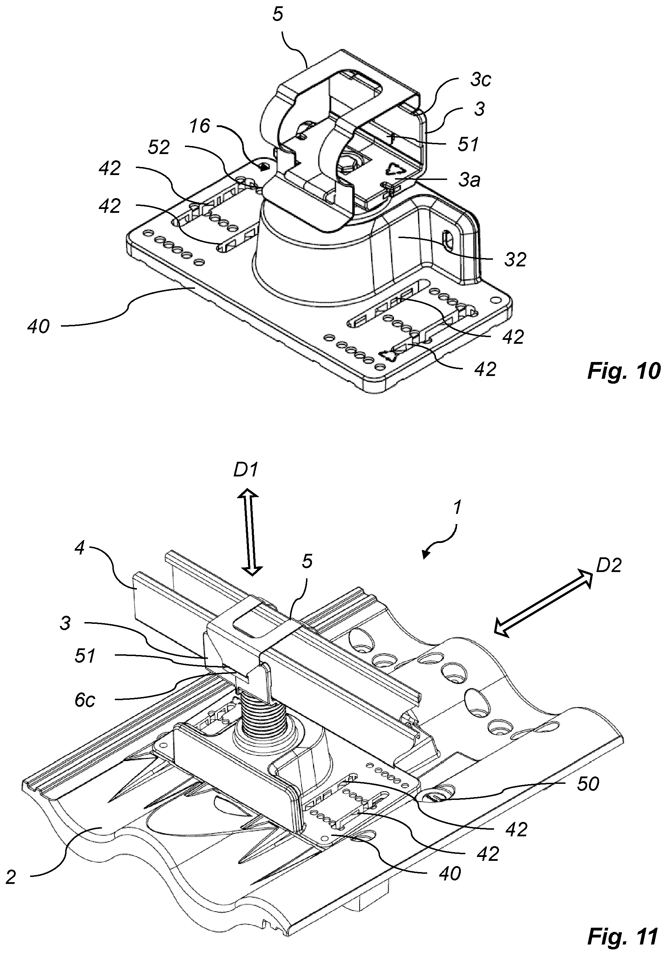

In the embodiment illustrated in figs. 7-11, the roof attachment console 1 further comprises, according to the invention, an adjustment member comprising a threaded rod 30 and a threaded opening 34. The threaded rod 30 is fixed to the rail receiving plate 3. The threaded opening 34 is arranged to the bottom plate 2. By rotating the threaded rod 30 (and the rail receiving plate 3), the rail receiving plate 3 may be adjusted in position relative to the bottom plate 2. The rail receiving plate 3 can thereby be adjusted in position along the direction D1 as illustrated in figs. 7, 10 and 11. Fig. 10 illustrates the rail receiving plate 3 in a bottom position wherein the threaded rod 30 is fully screwed into the threaded opening 34. In e.g. fig. 7, the threaded rod 30 is instead in an extended position wherein a smaller part of the threaded rod 30 is in threaded engagement with the threaded opening 34.

In the illustrated embodiments, as illustrated in figs. 7-14, the roof attachment console 1 further comprises, according to the invention, an adjustment plate 40, adjustably arranged to the bottom plate 2. The adjustment plate 40 supports the rail receiving plate 3. If the roof attachment console 1 also comprises an adjustment member with threaded rod 30 and opening 34, the adjustment plate 40 comprises the threaded opening 34.

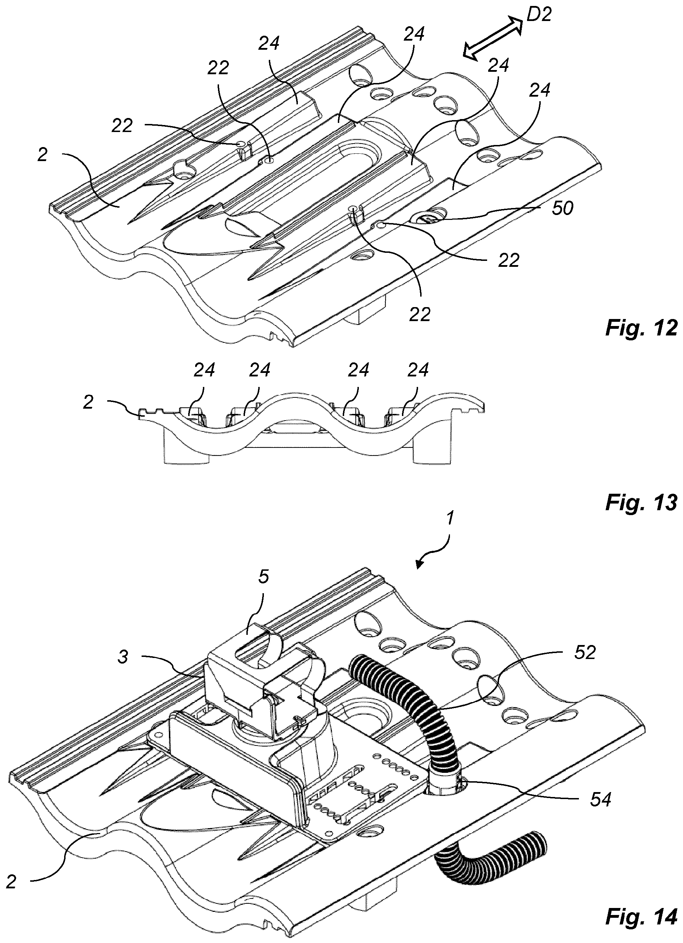

The adjustment plate 40 comprises two or more, in the illustrated embodiment four, elongated openings 42. The adjustment plate 40 is configured to be fixed to the bottom plate 40 by means of fastening means (not shown), typically screws. The bottom plate 2 comprises a number of threaded screw holes 22 corresponding to the number of elongated openings 42 (see fig. 12). The screws for fixing the adjustment plate 40 extends through the elongated openings 42 to be screwed into the screw holes 22. Due to the elongated openings 42, the adjustment plate 40 may have different positions relative to the bottom plate 2 when being fixed thereto by the screws. The adjustment plate's 40 position on the bottom plate 2 may thereby be adjusted along the direction D2 as indicated in figs. 7, 11 and 12. In figs. 7 and 11 the adjustment plate 40 is positioned in different positions along direction D2 relative to the bottom plate 2.

The adjustment plate 40 rests on ridges 24 on the bottom plate 2. The ridges 24 may be provided in order to have flat surfaces for the adjustment plate 40 to be supported on, since the bottom plate 2 at least partly may have a shape adapted to fit to other roof tiles of the roof on which it is arranged. The ridges 24 may further be formed to provide a desired inclination and thereby orientation of the adjustment plate 40 and rail receiving plate 3. In the illustrated embodiment the ridges 24 are formed as wedges, providing a slight inclination compared to the surrounding surface of the bottom plate 2. Each ridge 24 may be provided with a screw hole 22 for fastening means to fix the adjustment plate 40.

In the illustrated embodiment, and according to the invention, the adjustment plate 40 and the function of adjustability of the rail receiving plate along the direction D2 is provided in combination with the adjustability along direction D1 by means of the threaded rod 30 and opening 34. However, other embodiments may comprise the adjustment plate 40 without the adjustment plate 40 further comprising the threaded opening 34 for providing the adjustability along direction D1.

Likewise, in other embodiments than the illustrated, the roof attachment console may comprise the adjustability of the rail receiving plate 3 along direction D1 by means of the threaded rod 30 and opening 34, without the threaded opening 34 being provided in an adjustment plate 40 as illustrated. The threaded opening 34 may in a not claimed embodiment be formed directly on or in the bottom plate 2.

The illustrated embodiment of figs. 7-14 further comprises a cable hose connection opening 50. In fig. 14, there is provided a cable hose 52 attached to the cable hose connection opening 50 by means of a cable hose connection terminal 54. The cable hose 52 is used for guiding cables from an equipment, such as a solar panel, being arranged to the roof attachment console 1 via a mounting rail 4, to some other receiving equipment. To protect the cables when extending from the equipment, it may be beneficial if they extend below the roof tiles on the roof. In order to have safe cable entry through the bottom plate 2, the bottom plate 2 comprises the cable hose connection opening 50, configured for receiving a cable hose connection terminal 54. A sealed tightening is thereby provided for the cable hose 52. The cable hose connection opening 50 may be sealed when a cable hose connection terminal 54 is not arranged thereto. When a cable hose connection terminal 54 is to be arranged to the opening 50, the sealing is penetrated or removed in order to arrange the cable hose connection terminal 54 thereto. The cable hose connection terminal 54 may comprise two parts arranged from respective sides of the bottom plate 2 and the opening 50, being fixed to each other through the opening 50 to provide a tight sealed cable entry.

Such bottom plate 2 with a cable hose connection opening 50 may be provided as illustrated in combination with other parts of the roof attachment console 1 in different embodiments as described. Alternatively, there may be provided a roof attachment console 1 having the cable hose connection opening 50 in combination with another kind of rail receiving member configured to receive a mounting rail 4.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A roof attachment console (1) intended to be mounted onto a roof (100) and configured to replace a regular roof tile or roof panel of the roof, allowing a mounting rail (4) to be attached onto said attachment console, wherein said roof attachment console comprising:
a bottom plate (2) intended to be mounted onto the roof and configured to replace a regular roof tile or roof panel of the roof,
a rail receiving plate (3) attached to the bottom plate (2) and configured to receive a mounting rail (4), said rail receiving plate having at least one track (6a, 6b, 6c),
a fixation member (5) configured to, at a first end (51) of the fixation member (5), engage with said at least one track (6a, 6b, 6c), and at a second end (52) of the fixation member be attached to the rail receiving plate to fix a mounting rail (4) to the rail receiving plate (3),
an adjustment member arranged between the bottom plate (2) and the rail receiving plate (3), the adjustment member (32) comprising a threaded rod (30) and a threaded opening (34) configured for threaded engagement with said rod (30), wherein the rod is attached to the rail receiving plate (3), and the adjustment member (32) is configured to enable an adjustment of a distance between the rail receiving plate (3) and the bottom plate (2) by adjusting the threaded engagement between the rod and the threaded opening, and
an adjustment plate (40) arranged between the bottom plate (2) and the rail receiving plate (3), wherein the adjustment plate (40) is configured to be attached to the bottom plate by means of fastening means in an adjustable position along a longitudinal extension (D2) of the bottom plate, wherein the adjustment plate (40) comprises at least two elongated openings (42) through which fastening means are configured to extend to engage with the bottom plate (2), wherein different positions of the fastening means in the elongated openings (42) provide different positions of the adjustment plate (40) relative to the bottom plate (2).

2. The roof attachment console (1) according to claim 1, wherein the fixation member (5) is configured to, at the second end (52) of the fixation member (5), be attached to the rail receiving plate (3) by at least one fastening means.

3. The roof attachment console (1) according to claim 2, wherein at least one of the fastening means is a screw, a bolt, or a snapping means.

4. The roof attachment console (1) according to claim 3, wherein the fastening means is a snapping means, and the rail receiving plate (3) comprises a first snap member (16a) and the fixation member comprises a second snap member (16b), the first and second snap members being configured to engage with each other in a snap fastening.

5. The roof attachment console (1) according to any one of claims 2-4, wherein the fixation member (5) is configured for different engagement with the at least one track (6a, 6b, 6c) of the rail receiving plate (3) depending on the size of the mounting rail (4).

6. The roof attachment console (1) according to any of the preceding claims, wherein the fixation member (5) comprises at least one pair of recesses configured to engage with the at least one track (6b) of the rail receiving plate (3).

7. The roof attachment console (1) according to any of the preceding claims, said attachment console being configured to fix the mounting rail (4) to the rail receiving plate (3) through force resulting from the fixation member (5) being attached to the rail receiving plate (3).

8. The roof attachment console (1) according to claim 6, wherein the fixation member (5) comprises at least two pair of recesses, wherein which pair of recesses to engage with the at least one track (6b) of the rail receiving plate (3) depend on the size of the mounting rail (4) to be fixed to the rail receiving plate (3).

9. The roof attachment console (1) according to any of the preceding claims, wherein the rail receiving plate (3) has a first portion (3a) extending in a first plane, a second portion (3b) extending in a second plane in parallel with and offset said first plane, wherein the first and second portions (3a, 3b) are connected via a third portion (3c) extending between said first and second planes.

10. The roof attachment console (1) according to claim 9, wherein the at least one track comprises a first track (6a) arranged on said first portion (3a) and a second track (6b) on said second portion (3b).

11. The roof attachment console (1) according to claim 10, wherein the fixation member (5) engages with the first track (6a) by a fastening means and wherein one of the at least one pairs of recesses engages with the second track (6b).

12. The roof attachment console (1) according to any one of claim 1-8, wherein the rail receiving plate (3) comprises a first portion (3a) extending in a first plane, and a third portion (3c) extending perpendicular to said first plane, wherein said at least one track comprises a third track (6c) on said third portion (3c), wherein the first end of the fixation member (5) is configured to engage with said third track (6c).

13. The roof attachment console (1) according to claim 12, wherein the first end (51) of the fixation member (5) comprises a hook shape or bent shape configured to engage with the third track (6c).

## Patentansprüche

1. Dachbefestigungskonsole (1), die zur Montage auf einem Dach (100) vorgesehen und so konfiguriert ist, dass sie einen herkömmlichen Dachziegel oder eine Dachplatte des Daches ersetzt, wodurch die Anbringung einer Montageschiene (4) an dieser Befestigungskonsole ermöglicht wird, wobei die Dachbefestigungskonsole umfasst:
eine Bodenplatte (2), die dazu vorgesehen ist, auf dem Dach montiert zu werden und einen herkömmlichen Dachziegel oder ein Dachelement des Daches zu ersetzen;
eine Schienenaufnahmeplatte (3), die an der Bodenplatte (2) angebracht und dazu eingerichtet ist, eine Montageschiene (4) aufzunehmen, wobei die Schienenaufnahmeplatte mindestens eine Schienenbahn (6a, 6b, 6c) aufweist;
ein Befestigungselement (5), das dazu eingerichtet ist, mit einem ersten Ende (51) des Befestigungselements (5) in die mindestens eine Schienenbahn (6a, 6b, 6c) einzugreifen und an einem zweiten Ende (52) des Befestigungselements (5) an der Schienenaufnahmeplatte angebracht zu werden, um eine Montageschiene (4) an der Schienenaufnahmeplatte (3) zu fixieren;
ein Verstellelement, das zwischen der Bodenplatte (2) und der Schienenaufnahmeplatte (3) angeordnet ist, wobei das Verstellelement (32) eine Gewindestange (30) und eine Gewindeöffnung (34) umfasst, die für einen Gewindeeingriff mit der Stange (30) ausgelegt ist, wobei die Stange an der Schienenaufnahmeplatte (3) befestigt ist, und wobei das Verstellelement (32) dazu eingerichtet ist, eine Anpassung des Abstands zwischen der Schienenaufnahmeplatte (3) und der Bodenplatte (2) durch Verstellen des Gewindeeingriffs zwischen der Stange und der Gewindeöffnung zu ermöglichen; und
eine Einstellplatte (40), die zwischen der Bodenplatte (2) und der Schienenaufnahmeplatte (3) angeordnet ist, wobei die Einstellplatte (40) dazu eingerichtet ist, mittels Befestigungsmitteln in einer einstellbaren Position entlang einer Längserstreckung (D2) der Bodenplatte an dieser befestigt zu werden, wobei die Einstellplatte (40) mindestens zwei Langlöcher (42) aufweist, durch die sich Befestigungsmittel erstrecken können, um in die Bodenplatte (2) einzugreifen, wobei unterschiedliche Positionen der Befestigungsmittel in den Langlöchern (42) zu unterschiedlichen Positionen der Einstellplatte (40) relativ zur Bodenplatte (2) führen.

2. . Dachbefestigungskonsole (1) nach Anspruch 1, wobei das Befestigungselement (5) dazu eingerichtet ist, an dem zweiten Ende (52) des Befestigungselements (5) mittels mindestens eines Befestigungsmittels an der Schienenaufnahmeplatte (3) befestigt zu werden.

3. . Dachbefestigungskonsole (1) nach Anspruch 2, wobei es sich bei mindestens einem der Befestigungsmittel um eine Schraube, einen Bolzen oder ein Schnappelement handelt.

4. . Dachbefestigungskonsole (1) nach Anspruch 3, wobei das Befestigungsmittel ein Schnappelement ist und wobei die Schienenaufnahmeplatte (3) ein erstes Schnappelement (16a) und das Befestigungselement ein zweites Schnappelement (16b) aufweist, wobei das erste und das zweite Schnappelement dazu eingerichtet sind, in einer Schnappverbindung ineinander einzugreifen.

5. . Dachbefestigungskonsole (1) nach einem der Ansprüche 2 bis 4, wobei das Befestigungselement (5) dazu eingerichtet ist, in Abhängigkeit von der Größe der Montageschiene (4) auf unterschiedliche Weise mit der mindestens einen Führungsbahn (6a, 6b, 6c) der Schienenaufnahmeplatte (3) in Eingriff zu treten.

6. . Dachbefestigungskonsole (1) nach einem der vorhergehenden Ansprüche, wobei das Befestigungselement (5) mindestens ein Paar von Aussparungen aufweist, die dazu eingerichtet sind, mit der mindestens einen Führungsbahn (6b) der Schienenaufnahmeplatte (3) in Eingriff zu treten.

7. . Dachbefestigungskonsole (1) nach einem der vorhergehenden Ansprüche, wobei die Befestigungskonsole dazu eingerichtet ist, die Montageschiene (4) an der Schienenaufnahmeplatte (3) mittels einer Kraft zu fixieren, die dadurch entsteht, dass das Befestigungselement (5) an der Schienenaufnahmeplatte (3) befestigt wird.

8. . Dachbefestigungskonsole (1) nach Anspruch 6, wobei das Befestigungselement (5) mindestens zwei Paare von Aussparungen aufweist, wobei die Auswahl des Paares von Aussparungen, das mit der mindestens einen Führungsbahn (6b) der Schienenaufnahmeplatte (3) in Eingriff tritt, von der Größe der an der Schienenaufnahmeplatte (3) zu befestigenden Montageschiene (4) abhängt.

9. . Dachbefestigungskonsole (1) nach einem der vorhergehenden Ansprüche, wobei die Schienenaufnahmeplatte (3) einen ersten Abschnitt (3a), der sich in einer ersten Ebene erstreckt, und einen zweiten Abschnitt (3b) aufweist, der sich in einer zweiten Ebene erstreckt, die parallel zu der ersten Ebene verläuft und gegenüber dieser versetzt ist, wobei der erste und der zweite Abschnitt (3a, 3b) über einen dritten Abschnitt (3c) miteinander verbunden sind, der sich zwischen der ersten und der zweiten Ebene erstreckt.

10. . Dachbefestigungskonsole (1) nach Anspruch 9, wobei die mindestens eine Schienenbahn eine erste Schienenbahn (6a), die auf dem ersten Abschnitt (3a) angeordnet ist, und eine zweite Schienenbahn (6b), die auf dem zweiten Abschnitt (3b) angeordnet ist, umfasst.

11. . Dachbefestigungskonsole (1) nach Anspruch 10, wobei das Befestigungselement (5) mittels eines Befestigungsmittels in die erste Schienenbahn (6a) eingreift und wobei eines des mindestens einen Paares von Aussparungen in die zweite Schienenbahn (6b) eingreift.

12. . Dachbefestigungskonsole (1) nach einem der Ansprüche 1 bis 8, wobei die Schienenaufnahmeplatte (3) einen ersten Abschnitt (3a), der sich in einer ersten Ebene erstreckt, und einen dritten Abschnitt (3c) umfasst, der sich senkrecht zu der ersten Ebene erstreckt, wobei die mindestens eine Schienenbahn eine dritte Schienenbahn (6c) auf dem dritten Abschnitt (3c) umfasst, wobei das erste Ende des Befestigungselements (5) dazu eingerichtet ist, in die dritte Schienenbahn (6c) einzugreifen.

13. . Dachbefestigungskonsole (1) nach Anspruch 12, wobei das erste Ende (51) des Befestigungselements (5) eine Hakenform oder eine gebogene Form aufweist, die dazu eingerichtet ist, in die dritte Schienenbahn (6c) einzugreifen.

## Revendications

1. Console de fixation de toit (1) destinée à être montée sur un toit (100) et configurée pour remplacer une tuile ou un panneau de toit standard du toit, permettant de fixer un rail de montage (4) à ladite console de fixation, dans laquelle
ladite console de fixation de toit comprend :
une plaque de base (2) destinée à être montée sur le toit et configurée pour remplacer une tuile ou un panneau de toit standard du toit,
une plaque de réception de rail (3) fixée à la plaque de base (2) et configurée pour recevoir un rail de montage (4), ladite plaque de réception de rail comportant au moins une fente (6a, 6b, 6c),
un élément de fixation (5) configuré pour venir en prise avec ladite au moins une fente (6a, 6b, 6c) à une première extrémité (51) de l'élément de fixation (5), et pour être fixé à la plaque de réception de rail à une deuxième extrémité (52) de l'élément de fixation (5), afin de fixer un rail de montage (4) à la plaque de réception de rail (3),
un organe de réglage disposé entre la plaque de base (2) et la plaque de réception de rail (3), l'organe de réglage (32) comprenant une tige filetée (30) et une ouverture filetée (34) configurée pour venir en prise par filetage avec ladite tige (30), dans laquelle la tige est fixée à la plaque de réception de rail (3), et l'organe de réglage (32) est configuré pour permettre de régler une distance entre la plaque de réception de rail (3) et la plaque de base (2) par réglage de l'engagement fileté entre la tige et l'ouverture filetée, et
une plaque de réglage (40) disposée entre la plaque de base (2) et la plaque de réception de rail (3), dans laquelle la plaque de réglage (40) est configurée pour être fixée à la plaque de base par des moyens de serrage dans une position réglable le long d'une extension longitudinale (D2) de la plaque de base, dans laquelle la plaque de réglage (40) comprend au moins deux ouvertures allongées (42) à travers lesquelles les moyens de serrage peuvent s'étendre pour venir en prise avec la plaque de base (2), dans laquelle différentes positions des moyens de serrage dans les ouvertures allongées (42) fournissent différentes positions de la plaque de réglage (40) par rapport à la plaque de base (2).

2. Console de fixation de toit (1) selon la revendication 1, dans laquelle l'élément de fixation (5) est configuré pour être fixé à la plaque de réception de rail (3) par au moins un moyen de serrage à la deuxième extrémité (52) de l'élément de fixation (5).

3. Console de fixation de toit (1) selon la revendication 2, dans laquelle au moins l'un des moyens de serrage est une vis, un boulon ou un moyen d'encliquetage.

4. Console de fixation de toit (1) selon la revendication 3, dans laquelle le moyen de serrage est un moyen d'encliquetage, et la plaque de réception de rail (3) comprend un premier élément d'encliquetage (16a) et l'élément de fixation comprend un deuxième élément d'encliquetage (16b), les premier et deuxième éléments d'encliquetage étant configurés pour venir en prise l'un avec l'autre par une fixation par encliquetage.

5. Console de fixation de toit (1) selon l'une quelconque des revendications 2 à 4, dans laquelle l'élément de fixation (5) est configuré pour permettre différents engagements avec l'au moins une fente (6a, 6b, 6c) de la plaque de réception de rail (3) en fonction de la taille du rail de montage (4).

6. Console de fixation de toit (1) selon l'une quelconque des revendications précédentes, dans laquelle l'élément de fixation (5) comprend au moins une paire d'évidements configurés pour venir en prise avec l'au moins une fente (6b) de la plaque de réception de rail (3).

7. Console de fixation de toit (1) selon l'une quelconque des revendications précédentes, ladite console de fixation étant configurée pour fixer le rail de montage (4) à la plaque de réception de rail (3) au moyen d'une force résultant de l'élément de fixation (5) fixé à la plaque de réception de rail (3).

8. Console de fixation de toit (1) selon la revendication 6, dans laquelle l'élément de fixation (5) comprend au moins deux paires d'évidements, dans laquelle la paire d'évidements devant venir en prise avec l'au moins une fente (6b) de la plaque de réception de rail (3) dépend de la taille du rail de montage (4) à fixer à la plaque de réception de rail (3).

9. Console de fixation de toit (1) selon l'une quelconque des revendications précédentes, dans laquelle la plaque de réception de rail (3) comporte une première partie (3a) s'étendant dans un premier plan, une deuxième partie (3b) s'étendant dans un deuxième plan parallèle audit premier plan et décalé par rapport à celui-ci, dans laquelle les première et deuxième parties (3a, 3b) sont reliées par l'intermédiaire d'une troisième partie (3c) s'étendant entre lesdits premier et deuxième plans.

10. Console de fixation de toit (1) selon la revendication 9, dans laquelle l'au moins une fente comprend une première fente (6a) disposée sur ladite première partie (3a) et une deuxième fente (6b) sur ladite deuxième partie (3b).

11. Console de fixation de toit (1) selon la revendication 10, dans laquelle l'élément de fixation (5) vient en prise avec la première fente (6a) au moyen d'un moyen de serrage et dans laquelle l'une des au moins une paires d'évidements vient en prise avec la deuxième fente (6b).

12. Console de fixation de toit (1) selon l'une quelconque des revendications 1 à 8, dans laquelle la plaque de réception de rail (3) comprend une première partie (3a) s'étendant dans un premier plan, et une troisième partie (3c) s'étendant perpendiculairement audit premier plan, dans laquelle ladite au moins une fente comprend une troisième fente (6c) sur ladite troisième partie (3c), dans laquelle la première extrémité de l'élément de fixation (5) est configurée pour venir en prise avec ladite troisième fente (6c).

13. Console de fixation de toit (1) selon la revendication 12, dans laquelle la première extrémité (51) de l'élément de fixation (5) comprend une forme de crochet ou une forme courbée configurée pour venir en prise avec la troisième fente (6c).
